# EUROPÄISCHE PATENTSCHRIFT

(11) **EP 0 407 690 B1**
(45) Veröffentlichungstag und Bekanntmachung des Hinweises auf die Patenterteilung: **12.07.1995**
(21) Anmeldenummer: 90105525.1
(22) Anmeldetag: 23.03.1990
(51) Int. Cl.: H02G 1/02, H02G 7/20, G02B 6/44

(54) **Verbindungsanordnung der Enden zweier Lichtwellenleiter-(LWL)-Erdseile am Tragmast.**
Junction assembly for the ends of two earth wires with light wave guides on the mast.
Dispositif de jonction des extrémités de deux câbles de garde à guides d'ondes lumineuses au pylône.

(30) Priorität: 11.07.1989 DE 3922775
(43) Veröffentlichungstag der Anmeldung: 16.01.1991
(73) Patentinhaber: Felten & Guilleaume Energietechnik AG, D-51058 Köln (DE)
(72) Erfinder: Levacher, Friedrich, Karl, Dr., D-5024 Brauweiler (DE); Harjes, Bernd, Dr.-Ing., D-5060 Bergisch Gladbach 2 (DE); Brülls, Johannes, D-5253 Lindlar-Schmitzhöhe (DE); Beck, Manfred, Ing. grad, W-5000 Köln 90 (DE)

(56) Entgegenhaltungen:
- DE-B- 1 008 375
- DE-C- 3 338 190
- PATENT ABSTRACTS OF JAPAN, Bd. 9, Nr. 299 (P-408)(2022), 27. November 1985; & JP-A- 60 134 207
- PATENT ABSTRACTS OF JAPAN, Bd. 10, Nr. 45 (P-430)(2102), 21. Februar 1986; & JP-A-60 189 716
- ETZ - ELEKTROTECHNISCHE ZEITSCHRIFT, Bd. 110, Nr. 4, Februar 1989, BERLIN, DE, Seiten 158 - 164; R. HERFF: 'LWL - Luftkabel für Energiefreileitungen'

## Beschreibung

Die Erfindung betrifft die Verbindungsanordnung der Enden zweier Lichtwellenleiter-(LWL-)Erdseile am Tragmast nach dem Oberbegriff des Anspruchs 1.

LWL-Erdseile sind bekannt und mehrfach beschrieben, so in der EP-A-0 286 804. Das dortige LWL-Erdseil unterscheidet sich in seinem Aufbau von einem herkömmlichen Stahl-Aluminium-Erdseil praktisch nicht, denn es ist lediglich ein Stahldraht durch ein Edelstahlröhrchen, in dem die LWL untergebracht sind, ersetzt. Da der Außendurchmesser des LWL-Röhrchens genau dem der Stahldrähte entspricht, werden der übliche Seilverbund und die bekannte Seilmechanik nicht verändert, und es gibt kaum Rückwirkungen von den LWL-Röhrchen auf die Konstruktion, Handhabung und Armaturen dieses LWL-Erdseils.

Auch die Armaturen und die Montage von LWL-Erdseilen sind bekannt und beschrieben, so im Aufsatz von D. Rittich in Z. etz Bd. 110 (1989) S. 140-146. Die hier verwendeten Trag- und Abspannarmaturen sind von denen abgeleitet, die bereits bei den selbsttragenden Fernmelde-Luftkabeln verwendet werden. Die Abspannarmaturen sind zweilagig aufgebaut und bestehen aus Abspannspirale und Unter-(Schutz-)spirale, um Beschädigungen des Seils unter der Schlaufe der Abspannspirale zu vermeiden.

Im Aufsatz von Herff in ETZ - Elektrotechnische Zeitschrift, Bd. 110, S. 158 bis 164 wird eine Verbindungsanordnung nach dem Oberbegriff des Hauptanspruchs beschrieben.

Die genannten Dokumente machen keine detailierte Aussagen über die Befestigung des Erdseils auf der Mastspitze und die Ankopplung der Enden der Seile an die Verbindungsarmatur.

Der Erfindung liegt die Aufgabe zugrunde, eine Verbindungsanordnung der Enden zweier LWL-Erdseile am Tragmast anzugeben, bei der die Enden der Seile sicher auf der Mastspitze gehalten werden und die Enden der Seile möglichst ohne Zugbeanspruchung in die Verbindungsarmatur eingeführt sind.

Die Lösung dieser Aufgabe ist mit den kennzeichnenden Merkmalen des Anspruchs 1 angegeben. Eine vorteilhafte Weiterbildung findet sich im Anspruch 2.

Die zur Seilreparatur angegebene Lösung ist nicht nur bei LES-Erdseilen und Seilreparaturen anwendbar, sondern auch bei selbsttragenden Fernmelde-Luftkabeln, Erdseilen und dergleichen, bzw. bei Neuanlagen, wenn z. B. die Lieferlänge kleiner als die Strecke zwischen zwei Abspannmasten ist.

Anwendungsbeispiele der Erfindung sind in der Zeichnung dargestellt und werden im folgenden näher beschrieben. Es zeigen
- Fig. 1 die Verbindungsanordnung zweier LWL-Erdseile am Mast,
- Fig. 2 daraus als Ausschnitt die Umgebung des Tragbocks, aber mit Keilklemmen anstelle der mastseitigen Abspannspiralen,
- Fig. 3 schematisch die Reparatur eines defekten Seilabschnitts zwischen zwei Masten, und
- Fig. 4 daraus die Verbindungsanordnung der Seile am jeweiligen Mast.

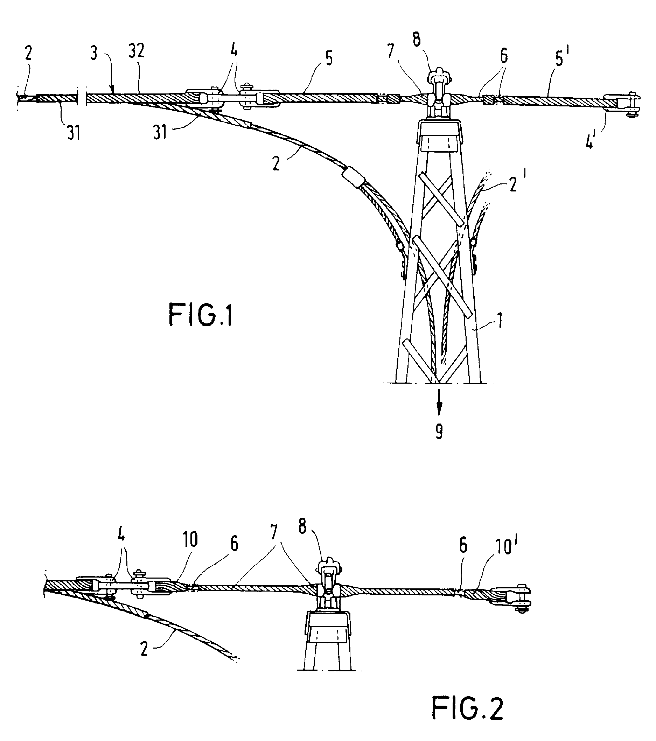

Fig. 1 zeigt eine Verbindungsanordnung der Enden zweier LWL-Erdseile 2, 2′ am Tragmast 1 unter Einsatz von Abspannarmaturen 3, 5, bestehend aus Abspann- und Unterspirale, Gabelkauschen 4, Zugseil 6 und Seiltragspirale 7. Es ist ersichtlich, daß die beiden Seilenden 2, 2′ mittels der feldseitigen Abspannarmaturen 3, 3′ zum Tragbock 8 des Mastes ausgelenkt und in eine Verbindungsarmatur 9 eingeführt sind, die auf einem Querträger ca. 3 bis 5 m unter der Mastspitze angeordnet ist, wobei die Stromklemmen der Verbindungsarmatur die Enden der Seile umfassen und die LWL-Röhrchen der Seile kraftfrei in ein LWL-Nuffengehäuse weitergeführt sind. Die Tragbock-Klemme umfaßt die Zugseil-Tragspirale 7 und diese das Zugseil 6, das mittels der mastseitigen Abspannarmaturen 5, 5′ und Gabelkauschen 4, 4′ mit den feldseitigen Abspannarmaturen 3, 3′ verbunden ist.

Fig. 2 zeigt, wie in besonders torsionsgefährdeten Seilabschnitten anstelle der mastseitigen Abspannarmaturen 5, 5′ Keilklemmen 10, 10′ eingesetzt sind.

Bei der Verbindungsanordnung ist die Schlaglänge der eingesetzten Spiralen 3 und 5 so festgelegt, daß auftretende Drehungen des LWL-Erdseils 2 nicht zum Aufdrehen der Spiralen führt.

Die Reparatur der selbsttragenden Fernmelde-Luftkabel und Erdseile in Freileitungstrassen wird innerhalb eines Spannfeldes mit sogenannten Spannfeldmuffen vorgenommen. Diese Muffen stellen Aufdikkungen des Seiles dar, die zu erhöhten Wind- und Eislasten führen. Die Reparatur mit Spannfeldmuffen gilt daher als Notlösung, und das betreffende Seil wird zu gegebener Zeit innerhalb des gesamten Spannfeldes ausgebaut und ersetzt.

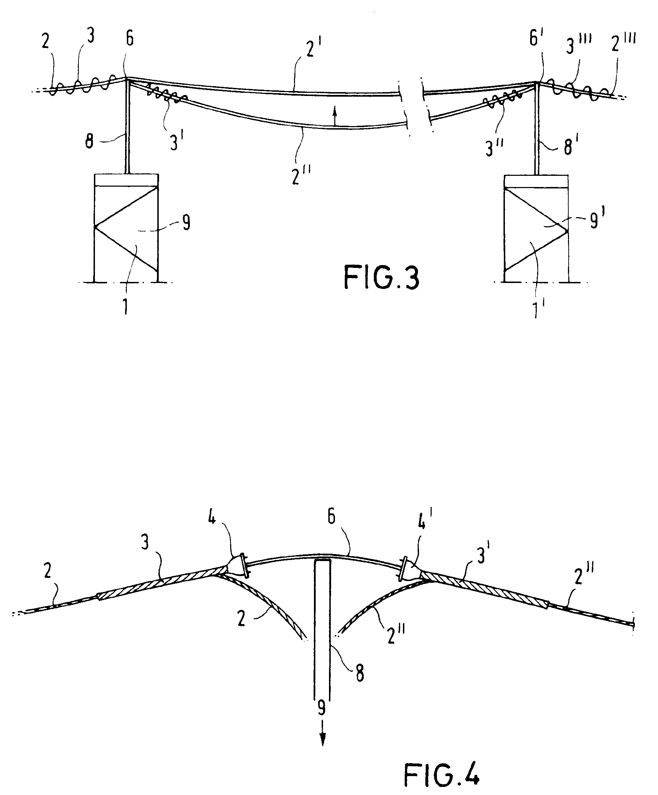

Fig. 3 verdeutlicht die Reparatur einer LWL-Erdseil-Verbindung der oben beschriebenen Art, wobei der zwischen zwei Tragmasten 1, 1′ defekte Seilabschnitt 2′ gegen ein neues Seil 2˝ ausgetauscht wird, wozu an den beiden Tragböcken 8, 8′ jeweils die mechanische Verbindung mit dem intakten Seil 2 mittels Zugseil 6 und Abspannarmaturen 3, und die elektrische und optische Verbindung mittels Verbindungsarmatur 9 und den erforderlichen Beilüberlängen erfolgt.

Die einzelnen Schritte erfolgen so, daß
a) zwischen den beiden Masten 1, 1′ ein neues Seil 2˝ mit überlänge eingezogen und durchhanggleich mit dem defekten Seilabschnitt mittels der Abspannarmaturen 3′, 3˝ an den Tragböcken 8, 8′ montiert wird,
b) die Enden der beiden anschließenden intakten Seilabschnitte 2, 2‴ mittels der Abspannarmaturen 3, 3‴ an den Tragböcken festgelegt und mit den Enden des neuen Seilabschnitts 2˝ mechanisch fest verbunden werden, und
c) der defekte Seilabschnitt 2′ in einer solchen Länge herausgenommen wird, daß an den Tragböcken eine überlänge zu den Verbindungsarmaturen 9, 9′ bleibt, wo schließlich die elektrische und optische Verbindung der Seilabschnitte 2, 2˝ und 2‴ erfolgt.

Bei der Seilreparatur werden die Verbindungsarmaturen (Muffen) 9 und 9′ innerhalb der Tragmasten 1 und 1′ wie bei Abspannmasten montiert. Dann wird in den Muffen die elektrische und optische Verbindung des eingesetzten neuen Seilabschnitt 2˝ mit den benachbarten intakten Seilabschnitten 2 und 2‴ vorgenommen.

Da an den Tragböcken 8 und 8′ die Abspannspiralen 3 und 3′ bzw. 3˝ und 3‴ über ein Zugseil 6 bzw. 6′, das im Tragbock eingehängt ist, fest verbunden sind, entstehen dort keine Schubkräfte in Trassenrichtung. Auf diese Weise werden die Kräfteverhältnisse an den Tragmasten durch die Reparaturmaßnahme nicht verändert, so daß die Reparatur dauerhaft ist.

## Patentansprüche

1. Verbindungsanordnung der Enden zweier Lichtwellenleiter-Erdseile (2,2′) am Tragmast (1) unter Einsatz von Abspannarmaturen (3,5),
bestehend aus Abspann- und Unterspirale, Gabelkauschen (4,4′), Zugseil (6) und Seiltragspirale (7),
wobei die beiden Seilenden (2,2′) mittels der feldseitigen Abspannarmaturen (3,3′) zum Tragbock (8) des Mastes ausgelenkt und in eine Verbindungsarmatur (9) eingeführt sind, die auf einem Querträger unter der Mastspitze angeordnet ist,
wobei die Lichtwellenleiter-Röhrchen der Seile kraftfrei in ein Lichtwellenleiter-Muffengehäuse weitergeführt sind,
und das Zugseil (6) mittels der mastseitigen Abspannarmaturen (5,5′) und Gabelkauschen (4,4′) mit den feldseitigen Abspannarmaturen (3,3′) verbunden ist,
**dadurch gekennzeichnet**,
daß die Tragbock-Klemme die Zugseil-Tragspirale (7) und diese das Zugseil (6) umfaßt und daß die Stromklemmen der Verbindungsarmatur die Enden der Seile umfassen (Fig.1).

2. Verbindungsanordnung nach Anspruch 1, **dadurch gekennzeichnet**, daß in besonders torsionsgefährdeten Seilabschnitten anstelle der mastseitigen Abspannarmaturen (5,5′) Keilklemmen (10,10′) eingesetzt sind (Fig.2).

## Claims

1. Junction assembly for the ends of two light wave guide earthing conductors (2,2′) at the suspension tower (1) using anchoring fittings (3,5), comprising anchoring and secondary helices, fork thimbles (4,4′), pulling rope (6) and rope support helix (7), whereby the two conductor ends (2,2′) are deflected by means of the anchoring fittings on the span side (3,3′) from the support bracket (8) of the tower and inserted into a junction fitting (9) arranged on a crossarm under the top of the tower, whereby the light wave guide tubes of the conductors are routed without strain into a light wave guide joint box, and the pulling rope (6) is connected to the anchoring fittings on the span side (3,3′) by means of the anchoring fittings on the tower side (5,5′) and fork thimbles (4,4′), **characterized in that** the support bracket clamp surrounds the pulling rope support helix (7) which surrounds the pulling rope (6), and that the electrical terminals of the junction fitting surround the ends of the conductors (Fig. 1).

2. Junction assembly according to Claim 1, **characterized in that** in conductor sections with a particular risk of torsion, wedge clamps (10,10′) are used instead of the anchoring fittings on the tower side (5,5′) (Fig. 2).

## Revendications

1. Dispositif de jonction des extrémités de deux câbles de garde à guides d'ondes lumineuses (2, 2′) au pylône porteur (1) avec utilisation d'armatures d'ancrage (3, 5),
se composant d'une hélice d'ancrage et d'une hélice secondaire, de cosses à fourche (4, 4′), d'un câble de traction (6) et d'une hélice de suspension de câble (7),
dans lequel les deux extrémités de câble (2, 2′) sont déviées au moyen des armatures d'ancrage du côté champ (3, 3′) sur le chevalet (8) du pylône et sont introduites dans une armature de jonction (9), qui est disposée sur une traverse sous la pointe du pylône,
dans lequel les petits tubes à guides d'ondes lumineuses des câbles sont prolongés sans effort dans un boîtier de raccord à guides d'ondes lumineuses,
et le câble de traction (6) est relié aux armatures d'ancrage du côté champ (3, 3′) au moyen des armatures d'ancrage du côté pylône (5, 5′) et des cosses à fourche (4, 4′),
caractérisé en ce que la pince du chevalet entoure l'hélice de suspension (7) du câble de traction et celle-ci entoure le câble de traction (6) et en ce que les pinces à griffe de l'armature de jonction entourent les extrémités des câbles (Fig. 1).

2. Dispositif de jonction suivant la revendication 1, caractérisé en ce que l'on utilise des ancrages à coin (10, 10′) au lieu des armatures d'ancrage du côté pylône (5, 5′) dans les tronçons de câbles particulièrement menacés de se tordre (Fig. 2).
